# EUROPÄISCHE PATENTSCHRIFT

(11) **EP 3 209 536 B1**
(45) Veröffentlichungstag und Bekanntmachung des Hinweises auf die Patenterteilung: **06.03.2019**
(21) Anmeldenummer: 15781689.3
(22) Anmeldetag: 20.10.2015
(51) Int. Cl.: B62B 9/10, B62B 7/12

(54) **SITZ FÜR EINEN KINDERWAGEN UND/ODER PUPPENWAGEN**
SEAT FOR A STROLLER AND/OR DOLLS CART
SIEGE POUR UNE POUSSETTE ET/OU UN CHARIOT DES POUPÉES

(30) Priorität: 22.10.2014 DE 202014105063 U
(43) Veröffentlichungstag der Anmeldung: 30.08.2017
(73) Patentinhaber: Curt Würstl Vermögensverwaltungs-GmbH & Co. KG, 95032 Hof (DE)
(72) Erfinder: WÜRSTL, Jan-Stefan, 95028 Hof (DE)
(74) Vertreter: Sperschneider, Alexandra
(86) Internationale Anmeldenummer: PCT/EP2015/074232
(87) Internationale Veröffentlichungsnummer: WO 2016/062702

(56) Entgegenhaltungen:
- DE-C- 146 614
- FR-A- 973 505
- NL-C2- 1 023 758
- US-A- 1 688 576

## Beschreibung

Die vorliegende Erfindung betrifft einen Sitz, welcher insbesondere an einem Kinderwagen- und/oder Puppenwagengestell verankert ausgebildet ist, umfassend wenigstens ein Sitzelement, eine Rückenlehne, deren Neigung über einen Schwenkmechanismus entlang einer ersten Schwenkachse veränderbar ausgebildet ist, um den Sitz von einer Sitzposition in eine Liegeposition oder umgekehrt zu verbringen, sowie eine Beinauflage zum Abstützen der Beine, welche verschwenkbar um eine weitere Schwenkachse am Sitzelement angelenkt ist.

Aus dem Stand der Technik sind derartige Sitze bekannt, welche sich insbesondere bei Kinderwägen häufig als nachteilig erweisen. Gerade für aktive Kleinkinder sind gängige Sitze nachteilig, da die Rückenlehne getrennt von der Beinauflage manuell zu verstellen ist. So ist es für die Eltern entsprechend schwierig, den Sitz von einer aufrechten Sitzposition in eine Liegeposition zu verbringen, indem sie zunächst die Rückenlehne manuell nach hinten klappen, um anschließend, dann die Beinauflage in eine im Wesentlichen horizontale Ausrichtung zu verbringen, so dass das Kind bequem und sicher schlafen kann. Darüber hinaus besteht bei bekannten Sitzen das Problem, dass mit Sicherheitsgurten gesicherte Kinder bei dem Verbringen in die Liegeposition entgurtet werden müssen, da sonst der Gurt über dem Brustkorb zu Quetschungen und Verletzungen führen kann.

FR 973 505 A offenbart einen Sitz für Kinderwägen gemäß dem Oberbegriff von Anspruch 1, wobei über eine Hebelanordnung eine Rückenlehne mit einem Verbindungselement für eine Fußstütze verbunden ist. Zum gemeinsamen Verschwenken der Rückenlehne und der Fußstütze muss die Rückenlehne angehoben werden, wodurch ein Bolzen der Rückenlehne aus einer zugeordneten Raststelle geführt wird. Anschließend kann die Rückenlehne verschwenkt werden, wobei ein verschwenkbar gelagerter Hebel die Bewegung auf eine damit verschwenkbar verbundene Stange überträgt. Danach wird die Rückenlehne abgesetzt und greift in eine weitere Rast. Die Verlagerung der Stange bewirkt zudem ein Verschwenken der Fußstütze.

DE 146 614 C offenbart einen Kinderwagen mit einer Rückenlehne und einer Fußstütze, wobei eine Verbindungseinrichtung zwischen der Rückenlehne und der Fußstütze vorgesehen ist, welche eine erste Verbindungsstange und damit verschwenkbare zweite Verbindungsstangen aufweist. Die Verbindungseinrichtung überträgt die Bewegung der Rückenlehne beim Verschwenken auf die Fußstütze, welche ebenfalls verschwenkt wird. Dabei ist die Verbindungseinrichtung so ausgebildet, dass diese eine Längenänderung erfährt, wenn eine Druckbeaufschlagung auf die Rückenlehne erfolgt.

US 1,688,576 A offenbart einen verschwenkbaren Sessel, wobei eine Rückenlehne und ein Sitzelement eine feste Anordnung zueinander aufweisen. Werden die Rückenlehne und das Sitzelement verschwenkt, so erfolgt über eine Hebelanordnung zugleich ein Verschwenken einer Fußstütze.

Aus diesem Grund liegt der vorliegenden Erfindung die Aufgabe zu Grunde, einen Sitz bereitzustellen, welcher einfach und unkompliziert von einer Sitzposition in eine Liegeposition oder umgekehrt verbringbar ist. Darüber hinaus liegt der vorliegenden Erfindung die Aufgabe zu Grunde, einen Sitz bereitzustellen, welcher komfortabel und sicher für insbesondere Kleinkinder ausgebildet ist, ohne dass diese bei Veränderung der Sitzposition entgurtet werden müssen.

Diese Aufgabe wird gelöst durch einen Sitz gemäß Anspruch 1.

Der Kerngedanke der vorliegenden Erfindung besteht darin, dass zwischen der Rückenlehne und der Beinauflage eines gattungsgemäßen Sitzes eine Kopplungseinheit vorgesehen ist, die beim Absenken der Rückenlehne eine gegenläufige Bewegungstransformation der Beinauflage synchron oder zeitversetzt bewirkt und beim Hochstellen der Rückenlehne die Beinauflage in die untere Schwenkstellung zurückstellt oder für eine Rückstellung freigibt.

Zwischen der Rückenlehne und der Beinauflage kann gemäß der Erfindung eine zwangsweise Bewegungstransformation vorgesehen sein oder aber auch eine zeitversetzte Bewegungstransformation. Bei der zwangsweisen Bewegungstransformation kann beispielsweise ein stangenförmiges Verbindungselement an mindestens einem Mitnehmer an der Unterseite der Rückenlehne im Bereich der Schwenkachse an dem Sitzelement und an mindestens einem Mitnehmer an der Unterseite der Beinauflage angelenkt sein. Es ist ersichtlich, dass dann beim Verschwenken der Rückenlehne in bekannter Art und Weise automatisch die Beinauflage mitverschwenkt wird. Der Mitnehmer kann eine an der Rückseite der Rückenlehne im Bereich der Schwenkachse am Sitzelement befestigte Lasche sein, die eine Lagerungsbohrung zur Aufnahme des Lagerzapfens an dem stangenförmigen Verbindungselement aufweist. Der zweite Mitnehmer kann an einem Längsholm der Beinauflage angebracht sein. An diesem Mitnehmer ist das zweite Ende des stangenförmigen Verbindungselementes angelenkt.

Dieselbe Befestigungsart kann auch gewählt werden, wenn ein in seiner Länge veränderbares Verbindungselement vorgesehen ist, um ein zeitlich verzögertes Hochstellen der Beinauflage gegenüber der Bewegung der Rückenlehne zu bewirken. Das Verbindungselement besteht aus einem Teleskoprohr, das sich beim Absenken der hochgestellten Rückenlehne zunächst um ein definiertes Maß verkürzt, bevor durch weiteres Absenken das Verbindungselement die Beinauflage hochstellt. Es ist ersichtlich, dass beim erneuten Hochstellen der Rückenlehne das Verbindungselement sich automatisch wieder verlängert, also das Absenken der Beinauflage verzögert wird, bevor die Teleskopstange die Beinauflage zwangsweise synchron mit der restlichen Winkelverstellung der Rückenlehne absenkt.

Zur Feststellung der Rückenlehne ist es bekannt, an dem Sitzelement eine rastbare Schwenkachse vorzusehen oder in den Seitenteilen des Sitzelementes scheibenförmige Segmente mit Rastzähnen oder Rastausnehmungen zum Eingleiten von Sperransätzen an den Seitenträgern der Rückenlehne vorzusehen. Die Rückenlehne kann dadurch verschiedene Schrägstellungen einnehmen. Es ist aber auch möglich, die Rückenlehne durch einen Bügel zu halten, der zugleich auch Bestandteil eines aufklappbaren Sonnendaches oder Schutzdaches für den Sitz sein kann. Dieser Bügel kann an den Seitenteilen gesondert verschwenkbar gelagert sein und beispielsweise auch die Rückenlehne hintergreifen. Die Arretierung in den verschiedenen Schrägstellungen kann über entsprechend ausgebildete Lagerungen an den Seitenteilen des Sitzelementes sichergestellt werden.

Es hat sich als vorteilhaft erwiesen, eine derartige Kopplungseinheit zwischen Rückenlehne und Beinauflage vorzusehen, da die Kopplungseinheit bei Kraftbeaufschlagung der Rückenlehne zum Überführen von einer Sitzposition in eine Liegeposition ausreicht, so dass vorteilhaft zeitgleich, also synchron dazu, die Beinauflage von der zuvor im Wesentlichen vertikal ausgerichteten Sitzposition in eine im Wesentlichen horizontal ausgerichtete Liegeposition verbringbar ist. Das mühsame Verschwenken von Rückenlehne und Beinauflage nacheinander entfällt. Somit ermöglicht die Kopplungseinheit ein Verschwenken von Rückenlehne und Beinauflage mit lediglich einem einzigen Handgriff. Dies stellt eine enorme Erleichterung für die Eltern dar. Je nach Ausführungsform ist denkbar, diesen einzigen nötigen Handgriff mit einer Druckkraftbeaufschlagung auf die Rückenlehne zu ermöglichen.

Das wenigstens eine Verbindungselement ist bei Druckkraftbeaufschlagung auf die Rückenlehne in seiner Länge unveränderbar ausgebildet und bei Zugkraftbeaufschlagung auf die Rückenlehne in seiner Länge veränderbar ausgebildet.

Diese Kraftteilung ist besonders vorteilhaft. Soll zunächst der Sitz von der Sitzposition in die Liegeposition verbracht werden, wird die Rückenlehne mit einer Druckkraft beaufschlagt, so dass diese aus ihrer ursprünglichen Sitzposition ausgelenkt wird. Durch die Kopplungseinheit erfährt das wenigstens eine Verbindungselement vorteilhaft zeitgleich ebenfalls eine Druckkraftbeaufschlagung und wird aus seiner Ausgangsposition in Richtung der Beinauflage ausgelenkt. Hierbei ändert das Verbindungselement seine Längserstreckung nicht. Die Druckkraft wird folglich an die Beinauflage weitergleitet, so dass diese um eine Schwenkachse aus der Sitzposition ausgelenkt wird.

Beim Überführen in die Liegeposition ist es somit von Vorteil, wenn das wenigstens eine Verbindungselement nicht in seiner Länge veränderbar ausgebildet ist. Besonders vorteilhaft erfolgt die Auslenkung von Rückenlehne und Beinauflage synchron zueinander. Unter synchron ist vorteilhaft der zeitgleiche Bewegungsablauf zu verstehen.

Darüber hinaus hat es sich als vorteilhaft erwiesen, dass unter Längenänderung des wenigstens einen Verbindungsele ments, besonders vorteilhaft unter Längenvergrößerung, die Beinauflage in der Liegeposition verbleibt, während die Rückenlehne von der Liege- in die Sitzposition rückgeführt wird. In diesem Fall ist der Bewegungsablauf entkoppelt, so dass das Rückverschwenken der Rückenlehne von der Liege- in die Sitzposition unabhängig von der Position der Beinauflage erfolgt, welche beispielsweise in der Liegeposition verbleibt. Sowohl während des Verbringens des Sitzes in die Liegeposition als auch wieder zurück in die Sitzposition verbleibt das Sitzelement vorteilhaft unausgelenkt.

Weitere vorteilhafte Ausführungsformen ergeben sich aus den Unteransprüchen.

In einer weiteren vorteilhaften Ausführungsform ist das wenigstens eine in seiner Länge veränderbares Verbindungselement unterhalb des Sitzelements angeordnet. Dies ist von Vorteil, da somit das Verbindungselement nicht störenderweise im Sitz bzw. im Sitzelement selbst vorzusehen ist, sondern vorteilhaft unterhalb des Sitzelements, welches vorteilhaft als Sitzfläche ausgebildet ist, und von diesem beabstandet vorgesehen ist. Die Ausführung, dass das Verbindungselement in seiner Länge veränderbar ist, erweist sich dahingehend als vorteilhaft, da somit die Bewegungskopplung von Rückenlehne und Beinauflage mit nur wenigen Bauteilen realisiert werden kann.

Bei einer weiteren vorteilhaften Ausführungsform ist das Verbindungselement mehrteilig ausgebildet, vorteilhaft mehrteilig stangenartig. Es hat sich als vorteilhaft erwiesen, das Verbindungselement aus zumindest zwei Stangenelementen, welche bevorzugt rohrförmig als Rundrohr, Vierkantrohr oder besonders vorteilhaft als ineinandergreifende Teleskoprohre ausgebildet sind, zusammengesetzt ist, so dass das Verbindungselement durch das Ineinanderführen der teleskopartigen Stangenelemente in seiner Län ge selbst veränderbar ist.

Darüber hinaus ist die teleskopstangenartige Ausbildung des Verbindungselementes eine platzsparende Anordnung an dem Sitz selbst. Hierdurch kann zudem eine individuelle Einstellung zwischen der aufrechten Sitzposition und der horizontalen Liegeposition erfolgen.

Bei einer weiteren vorteilhaften Ausführungsform umfasst die Rückenlehne wenigstens einen, sich in Längsrichtung der Rückenlehne erstreckenden Vorsprung als Teil der Kopplungseinheit, wobei sich der Vorsprung über wenigstens ein Ende der Rückenlehne hinaus erstreckt. Dies ist von Vorteil, da hierdurch eine einfache und kostengünstige Verlängerung der Rückenlehne ermöglicht wird. Das freie Ende des Vorsprungs ist im einfachsten Fall gerade ausgebildet. Selbstverständlich ist dies nicht begrenzend zu verstehen, so dass auch beispielsweise denkbar ist, dass das freie Ende des Vorsprung konvex und/oder konkav gekrümmt ausgebildet ist. Für die Kraftverteilung und für die Stabilität hat es sich als vorteilhaft erwiesen, zwei derartige Vorsprünge an der Rückseite, also der Außenseite, vorzusehen. Die Vorsprünge sind aus Metall, beispielsweise Aluminium, und/oder Kunststoff ausgebildet.

In einer weiteren vorteilhaften Ausführungsform wirkt das jeweilige freie Ende des Vorsprungs mit einem freien Ende des Verbindungselementes zusammen, so dass hierdurch eine vorgelagerte Hebelachse ausgebildet ist. Diese Hebelachse erstreckt sich zumindest teilweise zwischen den beiden freien Enden der Vorsprünge senkrecht zu der Längserstreckung der Rückenlehne. Wird die Rückenlehne mit einer Druckkraft beaufschlagt, so erfährt diese zunächst eine Auslenkung um die direkte Schwenkachse, welche zwischen Sitzelement und Rückenlehne ausgebildet ist. Durch die verlängerte Ausbildung der Vorsprünge an der Rückseite der Rückenlehne und deren Kopplung zu dem wenigstens einen Verbindungselement unterhalb des Sitzelements, wobei das wenigstens eine Verbindungselement von dem Sitzelement vorteilhaft im Bereich von 2 cm bis 15 cm, noch vorteilhafter im Bereich von 4 cm bis 8 cm, beabstandet angeordnet ist (Sitzposition), ergibt sich eine weitere Achse, welche als vorgelagerte Hebelachse ausgebildet ist. Unter vorgelagert ist hierbei vorteilhaft zu verstehen, dass die Hebelachse der eigentlichen Schwenkachse der Rückenlehne vorgelagert ist. Diese Vorlagerung ermöglicht in einfacher und vorteilhafter Weise die direkte Kopplung und/oder auch Entkopplung von Rückenlehne und Beinauflage, wie oben bereits beschrieben.

Bei einer weiteren vorteilhaften Ausführungsform ist die Hebelachse unterhalb des Sitzelementes und/oder hinter der Rückenlehne angeordnet. Dies ist von Vorteil, da die Hebelachse somit versetzt zum Sitzelement und versetzt zur Rückenlehne ausgebildet ist. Dies ermöglicht eine leichte und vereinfachte Führung der Beinauflage in die Liegeposition. Zudem gewährleistet dieser Versatz eine dauerhafte und leichte Verschwenkbarkeit der Rückenlehne. Die Hebelachse wird während des Verbringes der Rückenlehne von der Sitz- in die Liegeposition ebenfalls mit verschwenkt, vorteilhaft in Richtung des Sitzelements, so dass auch das wenigstens eine teleskopartige Verbindungselement zwar in seiner Länge unverändert bleibt, aber ebenfalls eine Auslenkung in Richtung des Sitzelements erfährt. Vorteilhaft reduziert sich bei der Überführung der Rückenlehne von der Sitz- in die Liegeposition der Abstand zwischen dem wenigstens einen teleskopartig ausgebildeten Verbindungselement und dem Sitzelement und/oder zwischen der Hebelachse und dem Sitzelement.

Die hier beschriebene vorgelagerte Hebelachse erweist sich zudem für die Gurtführung als vorteilhaft. Ist bei dem hier dargestellten Sitz beispielsweise ein Sicherheitsgurt vorgesehen, so kann dieser zumindest teilweise senkrecht zu der Hebelachse und zumindest teilweise an ihr entlang geführt werden, wobei der Sicherheitsgurt durch Öffnungen in der Rückenlehne nach vorne in den tatsächlichen Sitzbereich verbracht werden kann, um das Kind dort zu sichern. Erfolgt nun ein Verschwenken der Rückenlehne von der Sitzposition in die Liegeposition, stellen die vorverlagerte Hebelachse und die daran angelenkte Gurtführung sicher, dass das Kind bei der Verbringung in die Liegeposition komfortabel und sicher zurückgeführt wird, ohne dass der Gurt am Hals oder an den Armen einschneidet. Die hier beschriebene Ausführungsform zeichnet sich somit vorteilhaft dafür aus, dass Kinder im angegurteten Zustand von der Sitzposition problemlos in die Liegeposition verbringbar sind, ohne Verletzungen oder Schäden davonzugtragen.

Bei einer weiteren vorteilhaften Ausführungsform ist die Beinauflage in der Liegeposition von der Rückenlehne entkoppelt ausgebildet. Während der Überführung in die Liegeposition ist der Bewegungsablauf der Beinauflage vorteilhaft mit dem Bewegungsablauf der Rückenlehne gekoppelt. Um sicherzustellen, dass die Beinauflage auch Bewegungen des Kindes im Schlaf standhält, ist vorteilhaft ein Rastmechanismus vorgesehen, welcher wenigstens ein Rastelement umfasst. Der Rastmechanismus mit dem wenigstens einen Rastelement stellt sicher, dass die Beinauflage in der im Wesentlichen horizontalen Position verbleibt. Das Verschwenken der Beinauflage in die Liegeposition ist vorteilhaft bis zu deren horizontaler Auslenkung, wobei noch vorteilhafter die Auslenkung über die Horizontale hinaus erfolgt, so dass das freie Ende der Beinauflage höher angeordnet ist als das Sitzelement. Das Rastelement hält die Beinauflage in der Liegeposition und ist vorteilhaft als Druckknopf, Zuglasche oder auch Feder derart ausgebildet, dass mit Erreichen der Liegeposition die Beinauflage und/oder wenigstens ein Abschnitt der Beinauflage mit dem Rastmechanismus wechselwirkt und vorteilhaft von diesem untergriffen und gehalten wird.

Vorteilhaft ist dieser Rastmechanismus derart stabil ausgebildet, dass die Zugkraftbeaufschlagung auf die Rückenlehne, um diese wieder in die Sitzposition zurückzuführen, nicht ausreicht, um den Rastmechanismus und die hierdurch wirkende Feststellkraft zu überwinden. Der Rastmechanismus hält die Beinauflage in der Liegeposition, so dass das wenigstens eine Verbindungselement in seiner Länge teleskopartig ausgezogen wird, um so den notwendigen Weg für die aufrechte Sitzposition der Rückenlehne zu ermöglichen.

Bei einer weiteren vorteilhaften Ausführungsform ist das Rastelement auf der weiteren Schwenkachse angeordnet. Dies ist der Einfachheit halber von Vorteil, da somit die weitere Schwenkachse zugleich auch das entsprechende Rastelement umfasst und somit eine einfache Kopplung und/oder Entkopplung von Beinauflage und Rückenlehne ermöglicht ist.

Bei einer weiteren vorteilhaften Ausführungsform ist das Rastelement manuell betätigbar ausgebildet. Vorteilhaft sind zwei Rastelemente vorgesehen, welche seitlich an der Beinauflage, zwischen Beinauflage und Sitzelement, vorgesehen sind. Vorteilhaft erstreckt sich die Schwenkachse der Beinauflage durch die beiden Rastelemente. Dies ist allerdings nicht zwingend erforderlich und stellt lediglich die einfachste und kostengünstigste Ausführungsform dar.

Im einfachsten Fall sind die Rastelemente derart ausgebildet, dass sie nach dem Einrasten der Beinauflage in der Liegeposition durch Druckkraftbeaufschlagung lösbar sind und die Entkopplung von Rückenlehne und Beinauflage aufgehoben werden kann. Es ist beispielsweise denkbar, die Rastelemente als Druckknöpfe vorzusehen, so dass eine Entriegelung durch Druckkraftbeaufschlagung und/oder Zugkraftbeaufschlagung möglich ist und hierdurch die Beinauflage und die Rückenlehne wieder synchron miteinander verbindbar und bewegbar sind.

Bei einer weiteren vorteilhaften Ausführungsform umfasst die Rückenlehne weiterhin ein Rahmenelement, welches vorteilhaft U-förmig ausgebildet ist und dessen Schenkelenden derart gelagert sind, dass diese beim Verschwenken der Rückenlehne von der Sitzposition in die Liegeposition und umgekehrt zumindest teilweise kreisbogenförmig geführt sind. Vorteilhaft hierbei ist das Rahmengestell an dem oberen freien Ende der Rückenlehne fest an dieser angeordnet und bildet hier die Basis der U-Form aus. Die durch diese Basis voneinander beabstandeten Schenkel erstrecken sich seitlich schräg nach unten in Richtung des Sitzelementes. Das Rahmengestell stabilisiert die Rückenlehne und deren Bewegungsablauf. Die freien Schenkelenden sind derart gelagert, dass ein Verbringen der Rückenlehne in die Liegeposition die Schenkelenden derart auslenkt, dass deren Auslenkungsweg einen Abschnitt eines Kreisbogens beschreibt. Vorteilhaft weist der theoretisch voll aufgespannte Kreisbogen als Mittelpunkt die direkte Schwenkachse und/oder die Hebelachse auf.

Die freien Enden der Schenkel sind weiterhin in einer vorteilhaften Ausführungsform an und/oder zumindest teilweise in Begrenzungselementen geführt angeordnet. Die Begrenzungselemente sind vorteilhaft seitlich des Sitzelements angeordnet und erstrecken sich in vertikaler Richtung nach oben. Es hat sich von Vorteil erwiesen, dass die Begrenzungselemente als Kreissegment ausgebildet sind, wobei jedes Begrenzungselement vorteilhaft wenigstens eine Ausnehmung oder Öffnung umfasst, die kreisbogenförmig ausgebildet ist und in welcher zumindest teilweise die freien Enden der Schenkel des Rahmenelements führbar gelagert sind. Die Ausnehmung stellt eine verlässliche und dauerhafte Führung der Schenkelenden sicher. In einfachster Ausführungsform ist die Ausnehmung oder Öffnung gleichmäßig, ohne Vorsprünge oder Nuten, ausgebildet.

Dies ist selbstverständlich nicht begrenzend zu verstehen, so dass es sich weiterhin in einer vorteilhaften Ausführungsform gezeigt hat, dass die Ausnehmung oder Öffnung vorteilhaft ein Stufenprofil aufweist. Das Stufenprofil weist vorteilhaft zwei, noch vorteilhafter drei Stufen auf. In Ergänzung hierzu sind die Schenkelenden vorteilhafter Weise derart ausgebildet, dass diese wenigstens einen Vorsprung aufweisen, welcher zumindest teilweise, vorteilhafter vollständig, innerhalb der Ausnehmung oder Öffnung anordenbar ist. Dieser Vorsprung der Schenkelenden tritt in Form- und/oder Kraftschluss mit den einzelnen Stufen des Stufenprofils, so dass hierdurch die Position der Rückenlehne in Abhängigkeit der Stufenanzahl entsprechend einstellbar ist. So ist beispielsweise denkbar, dass zum Verbringen der Rückenlehne in die Liegeposition das Rahmengestell im Bereich seiner freien Enden mit einer Zugkraft vorteilhaft angehoben wird, so dass der Form- und/oder Kraftschluss zwischen Vorsprung und erster Stufe aufgehoben wird. Sind lediglich zwei Stufen vorgesehen, so bildet die erste Stufe die Sitzposition und die zweite Stufe die Liegeposition aus. Insbesondere die zweite und letzte Stufe ist als Stoppstufe von Vorteil, da sie zugleich den Bewegungsweg der Rückenlehne sicher und verlässlich begrenzt. Es ist keine weitere kreisbogenförmige Bewegung über diese Stoppstufe hinaus möglich.

Wird andererseits die Beinauflage in der Liegeposition belassen und lediglich die Rückenlehne wieder aufgestellt, so erweist sich das Stufenprofil auch hier als vorteilhaft, da durch den Form- und/oder Kraftschluss zwischen Stufe und Vorsprung die Rückenlehne in der vorbestimmten Position gehalten werden kann, obwohl das wenigstens eine teleskopartige Verbindungselement ebenfalls eine gewisse Zugkraft in entgegengesetzter Richtung ausübt. Neben den hier beschriebenen Ausnehmungen oder Öffnungen sind ferner auch Führungsnuten denkbar, in welchen die Schenkelenden entsprechend gelagert und führbar sind.

Darüber hinaus ist denkbar, dass der Sitz weiterhin einen Sonnenschutz umfasst, welcher vorteilhaft direkt und/oder indirekt am Rahmenelement der Rückenlehne angeordnet ist und welcher bei Verschwenken der Rückenlehne zumindest teilweise kreisbogenförmig geführt wird. Als Sonnenschutz sind alle denkbaren Materialien einsetzbar, welche Licht- und UV-Strahlung abhalten.

Ferner ist vorstellbar, dass die Beinauflage weiterhin eine Fußstütze umfasst, welche in Längsrichtung des Sitzes verstellbar ausgebildet ist. Vorteilhaft ist die Fußstütze zumindest teilweise schalenförmig ausgebildet, so dass die Fersen des Kindes von dieser Schalenform aufgenommen werden und somit ein angenehmes Sitzen ermöglichen. Zudem hat diese Fußstütze, welche an ihrem freien Ende schalenförmig gekrümmt ausgebildet ist, eine Sicherungsfunktion, da durch diese nach oben offene Schalenform verhindert wird, dass die Kinder im Liegen aus dem Sitz herausrutschen. Die schalenförmige Fußstütze bildet somit eine Begrenzung gegen das Herausrutschen aus dem Sitz. Es ist denkbar, die Fußstütze aus Kunststoffmaterial bereitzustellen, welches leicht abwaschbar und reinigbar ist.

Je nach Größe des Kindes hat es sich zudem als vorteilhaft erwiesen, die Fußstütze entsprechend höhenverstellbar auszubilden, beispielsweise mittels Führungsnuten oder Rastelementen, so dass unabhängig von der Größe des Kindes immer eine ausreichende Sicherung gewährleistet wird.

Weitere Vorteilhafte Ausführungsform ergeben sich aus den beiliegenden Zeichnungen.

Darin zeigen:
- Fig. 1: zeigt eine Seitenansicht eines Sitzes in einer Sitzposition;
- Fig. 2: zeigt die Seitenansicht des Sitzes aus Fig. 1 in perspektivischer Darstellung;
- Fig. 3: zeigt einen Sitz in einer Seitendarstellung in einer Zwischenposition;
- Fig. 4: zeigt die Seitenansicht des Sitzes aus Fig. 3 in einer perspektivischen Darstellung;
- Fig. 5: zeigt eine Seitenansicht des Sitzes in der Liegeposition;
- Fig. 6: zeigt die Seitenansicht des Sitzes aus Fig. 5 in einer perspektivischen Darstellung;
- Fig. 7: zeigt eine Seitenansicht des Sitzes in einer weiteren Zwischenposition;
- Fig. 8: zeigt eine weitere Seitenansicht des Sitzes in einer perspektivischen Darstellung;
- Fig. 9: zeigt eine Seitenansicht eines Sitzes in einer Sitzposition mit hochgestellter Beinauflage; und
- Fig. 10: zeigt den Sitz gemäß Fig. 9 in perspektivischer Ansicht.

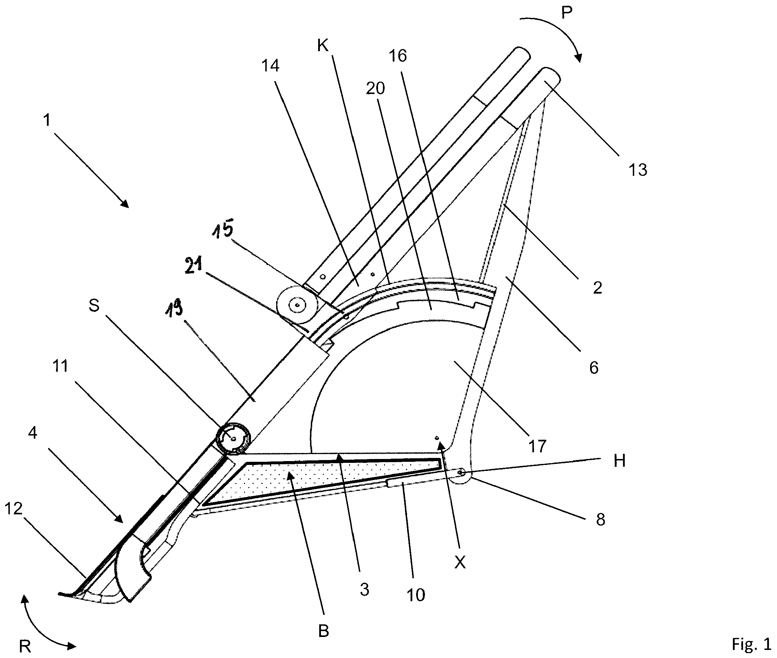

In Fig. 1 ist der Sitz 1 gezeigt, welcher eine Rückenlehne 2, ein Sitzelement 3 sowie eine Beinauflage 4 umfasst. Die Rückenlehne 2 ist hier in Sitzposition, also in aufrechter Position, dargestellt. Die Rückenlehne ist über die erste Schwenkachse X verschwenkbar ausgebildet, wobei vorteilhaft während der Verschwenkung in Pfeilrichtung P das Sitzelement 3 in Ruhe verbleibt und nicht mit ausgelenkt wird. Vorteilhaft verbleibt das Sitzelement 3 unabhängig von der Position der Rückenlehne 2 oder Beinauflage 4 in einer unveränderten, vorteilhafter horizontalen Position, wie in Fig. 1 dargestellt.

Die Beinauflage 4 ist hier in einer geneigten Sitzposition gezeigt. Diese Neigung ist besonders angenehm für das sitzende Kind. Die Beinauflage 4 umfasst ein Rahmengestell 11 sowie eine daran verschiebbar angeordnete Fußstütze 12. Das freie Ende der Fußstütze 12 ist schalenförmig ausgebildet. Das Verschwenken der Beinauflage 4 in Pfeilrichtung R erfolgt um die Schwenkachse S.

An der Rückenlehne 2 ist ein Vorsprung 6 fest angeordnet, welcher sich entlang der Rückenlehne 2 in deren Längsrichtung nach unten hin erstreckt. Der Vorsprung 6 ist länger ausgebildet als die Rückenlehne 2 und steht unten über deren Ende hinaus. Das freie Ende 8 des Vorsprungs 6 ist vorstehend dargestellt. Hierdurch ergibt sich eine Verlängerung der Rückenlehne 2 und somit auch eine verlängerte Hebelwirkung.

An diesem freien Ende 8 des Vorsprungs 6 ist das teleskopartige, mehrteilig ausgebildete Verbindungselement 10 vorteilhaft drehbar angeordnet.

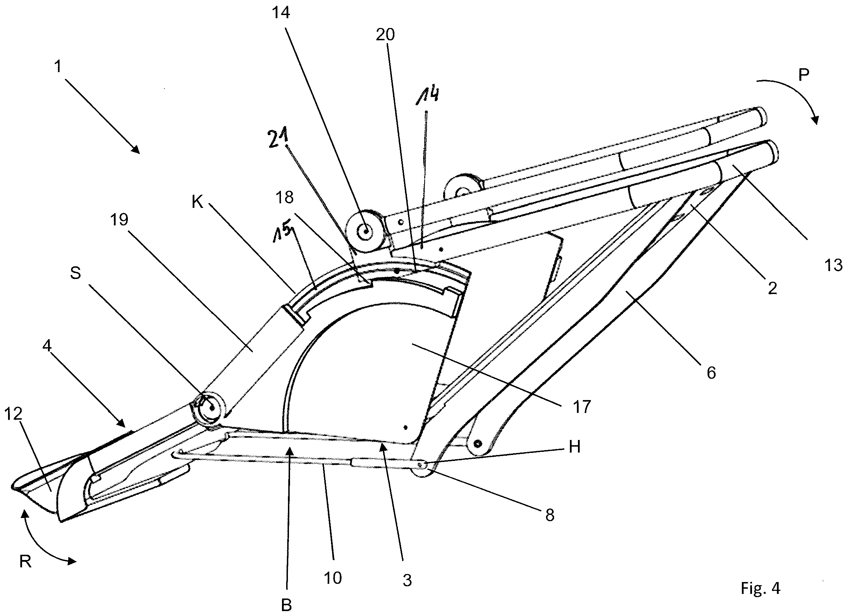

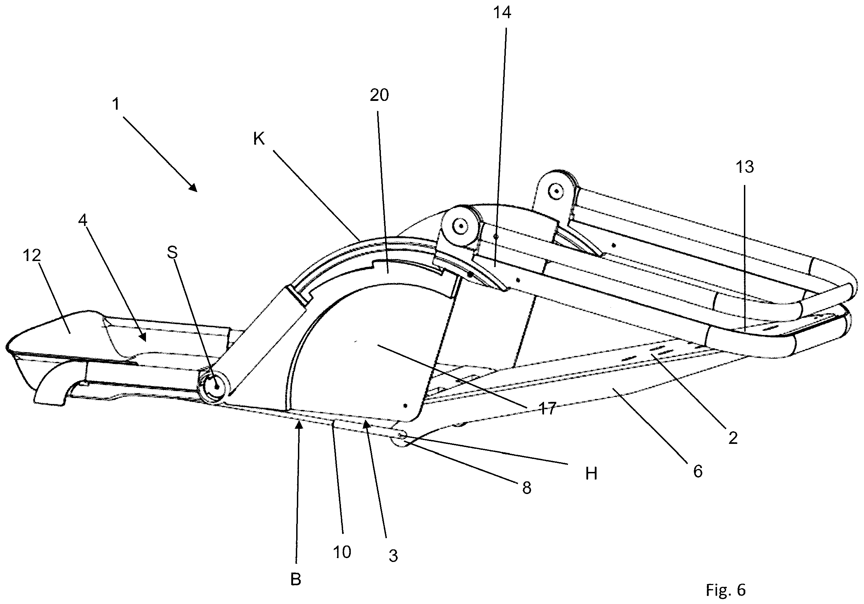

Die Rückenlehne 2 umfasst zudem ein Rahmenelement 13, dessen Schenkel 14 nach unten Richtung Sitzelement 3 geneigt ausgerichtet sind. Die Enden der Schenkel 14 sind an einem Lagerschlitten 21 verschwenkbar gelagert, der in einer kreissegmentförmigen Kulissenführung 15 verschoben werden kann. Die Enden der Schenkel 14 sind in einer Ausnehmung 16 des Begrenzungselements 17 geführt. Weiterhin weisen die Enden der Schenkel 14 vorteilhaft wenigstens einen nasenartigen Vorsprung 18 auf, welcher mit dem Stufenprofil 20 der Ausnehmung 16 in Formschluss und/oder Kraftschluss steht. In diesem Beispiel ist das Stufenprofil 20 dreistufig ausgebildet, so dass die Rückenlehne 2 neben der hier dargestellten Sitzposition über eine Zwischenposition (Fig. 4) in die Liegeposition (Fig. 6) verbringbar ist. Durch die Verwendung des Lagerschlittens 21 mit dem Rahmenelement 13 kann durch das Verschieben des Lagerschlittens in der Kulisse 15 die Rückenlehne 2 im Neigungswinkel verstellt werden. Die Rückenlehne liegt dabei an der Innenseite des Rahmenelementes 13 an. Anstelle dieser Lösung kann eine Rückenlehne auch in klassischer Art gelagert sein, d.h. über ein Rastlager am Sitzelement 3 schwenkbar befestigt sein. An dem Lagerschlitten 21 kann dann auch ein Bügel eines Daches oder Sonnenschutzes befestigt sein.

Erfährt die Rückenlehne 2 in der Sitzposition eine Druckkraftbeaufschlagung in Pfeilrichtung P nach unten, beispielsweise durch Anheben der Schenkelenden 14 und Lösen der Arretierung zwischen Vorsprung 18 und Stufenprofil 20, so laufen mehrere Bewegungsabläufe vorteilhaft synchron, also zeitgleich, ab. Zunächst beschreiben die Schenkelenden 18 innerhalb der Ausnehmung 16 zumindest teilweise einen Kreisbogen K. Hierdurch wird die Rückenlehne 2 um deren Schwenkachse X verschwenkt und die der Schwenkachse X vorgelagerte Hebelachse H wird in Richtung Sitzelement 3 geführt.

Durch dieses Verschieben der Hebelachse H wird das teleskopartige Verbindungselement 10 gegen die Beinauflage 4 geführt, so dass diese um deren Schwenkachse S nach oben in Pfeilrichtung R ausgelenkt wird. Das Verbindungselement 10 bleibt während dieses Bewegungsablaufs in seiner Länge unverändert, wird allerdings in Richtung des Sitzelements 3 geführt, so dass sich der Bereich B bzw. der Abstand zwischen Sitzelement 3 und Verbindungselement 10 verringert. Das Sitzelement 3 verbleibt unverändert in seiner ursprünglichen Position.

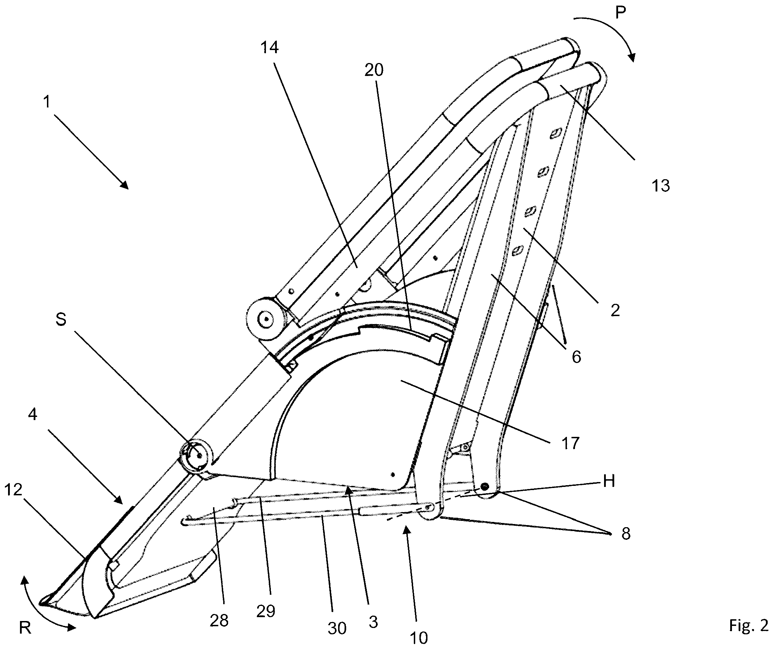

In Fig. 2 ist eine räumliche Darstellung des in Fig. 1 bereits beschriebenen Sitzes gezeigt, so dass gleiche Bauteile gleiche Bezugszeichen aufweisen und hier der einfachheitshalber nicht erneut erklärt werden.

Die perspektivische Darstellung zeigt, dass an der Rückenlehne 2 vorteilhaft zwei Vorsprünge 6 angeordnet sind, welche sich an der außenliegenden Rückseite der Rückenlehne 2 nach unten hin, vorteilhaft parallel zueinander, erstrecken. Beide Vorsprünge 6 ragen über die Rückenlehne 2 hinaus, so dass sich freie Enden 8 der Vorsprünge 6 ausbilden.

Darüber hinaus ist es vorteilhaft, die teleskopartigen Verbindungselemente 10 an der Beinauflage 4 beispielsweise mittels Einhaköffnungen, Ösen oder anderer Schnappmechanismen lösbar auszubilden. Dies ist selbstverständlich nicht begrenzend zu verstehen, so dass auch denkbar ist, dass die teleskopartigen Verbindungselemente 10 fest mit der Beinauflage 4 verbunden sind, beispielsweise verklebt oder verschweißt.

Die Anordnung von zwei parallelen teleskopartigen Verbindungselementen 10 erhöht darüber hinaus die Stabilität während der Bewegungstransformation und in den Endstellungen von Rückenlehne und Beinauflage, wobei die Basis 28 des U-förmigen Verbindungsteils der Verbindungselemente die Stabilität der Verbindungselemente erhöht. Die beiden Schenkel 29 und 30 erstrecken sich parallel zueinander in Richtung der freien Enden 8 der Vorsprünge 6. Durch diese U-förmige Anordnung wird die Kraft bei der Bewegungstransformation während des Verschwenkens der Rückenlehne 2 besser verteilt und somit auch ein Auslenken der Beinauflage 4 mit geringer Kraft erleichtert. Die Hebelachse H erstreckt sich zwischen den freien Enden 8 der Vorsprünge 6.

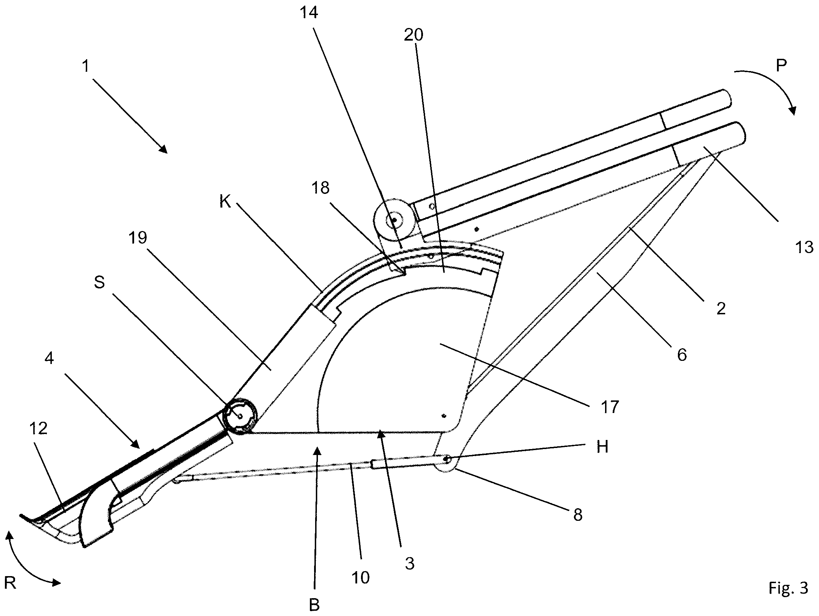

In Fig. 3 ist eine Zwischenposition des Sitzes 1 gezeigt. Auch hier entsprechen gleiche Bezugszeichen gleichen Bauteilen wie in den vorherigen Figuren. In dieser Darstellung ist die Rückenlehne 2 von der in Fig. 1 gezeigten im Wesentlichen senkrechten Sitzposition ausgelenkt, so dass die Schenkelenden 14 entlang des Kreisbogens K in der Ausnehmung 16 weiter geführt sind und der Vorsprung 18 mit der zweiten Stufe des Stufenprofils 20 eine form- und/oder kraftschlüssige Verbindung ausbildet.

Zugleich hat das Auslenken der Rückenlehne 2 zur Folge, dass die freien Enden 8 der Vorsprünge 6 ebenfalls verkippt werden, so dass die teleskopartigen Verbindungselemente 10 die einwirkende Druckkraft an die Beinauflage 4 weitergeben und diese um die Schwenkachse S nach oben in Pfeilrichtung R ausgelenkt wird. Zugleich erfolgt auch eine Auslenkung der vorgelagerten Hebelachse H in Richtung des Sitzelementes 3, so dass sich der Bereich B unterhalb des Sitzelementes 3 und des Verbindungselements 10 verringert.

In Fig. 4 ist eine entsprechende dreidimensionale Darstellung gezeigt, wo insbesondere die kreisförmige Bewegung entlang der Ausnehmungen 16 des jeweiligen Begrenzungselements 17 dargestellt ist. Der Lagerschlitten 21 ist über die Kulissenführung 15 soweit verschiebbar, bis er gegen den Anschlag 19 an der Seitenwand des Sitzelementes 3 fährt. Das Schwenklager für den Dachbügel legt außerhalb der Segmentbahn des Seitenteiles.

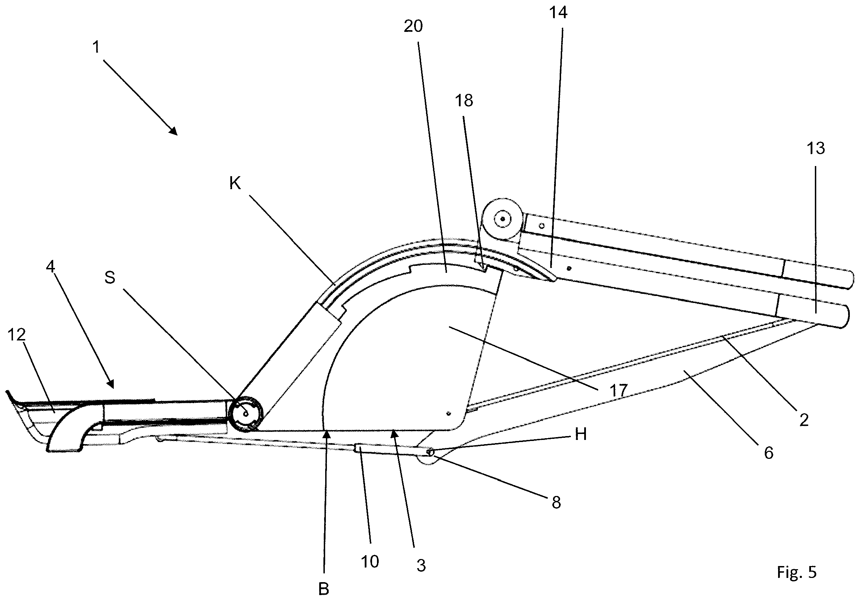

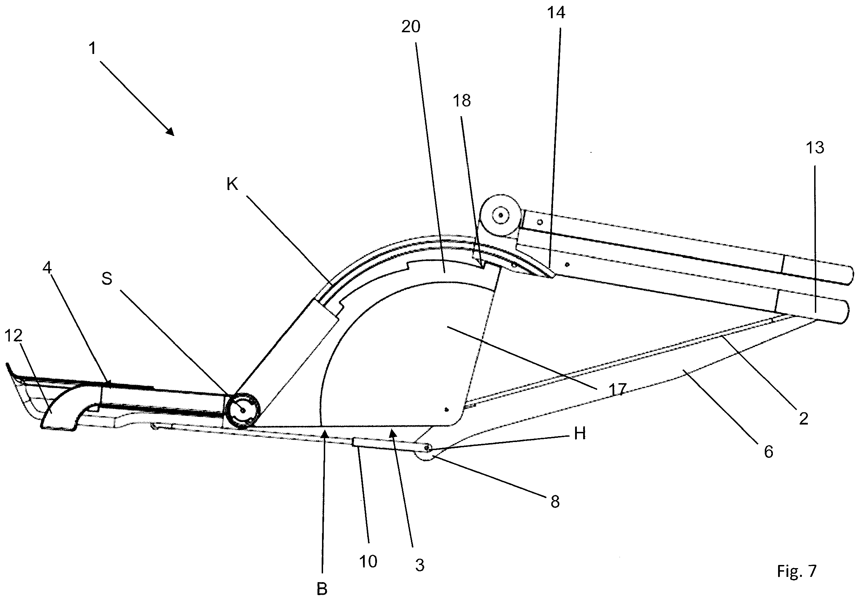

In Fig. 5 und Fig. 7 ist der Sitz 1 in der Liegeposition gezeigt, wobei die Beinauflage 4 vorteilhaft horizontal (Fig. 5) bzw. über die Horizontale hinaus geneigt (Fig. 7) um die Schwenkachse S verschwenkt ist. Die teleskopartigen Verbindungselemente 10 sind hierbei ebenfalls schräg angeordnet und spannen mit dem Sitzelement 3 und dem freien Ende 8 eine Dreiecksfläche auf.

Die Rückenlehne 2 ist im Wesentlichen eben nach hinten geführt und bietet somit eine komfortable Schlafposition für das im Wagen befindliche Kind (nicht gezeigt).

Die Hebelachse H ist weit unterhalb des Sitzelements 3 verschoben. Der Vorsprung 18 ist an der letzten Stufe arretiert, so dass ein weiteres Verschwenken der Rückenlehne 2 verhindert ist.

In Fig. 6 ist der entsprechende Sitz 1 aus Fig. 5 in einer perspektivischen Darstellung gezeigt, wobei hier insbesondere hervorgeht, dass das Rahmenelement 13 bzw. dessen Schenkelenden 14 in einer Endposition an dem Stufenprofil 20 angeordnet sind, wo sie als Begrenzung der Verschwenkung wirken.

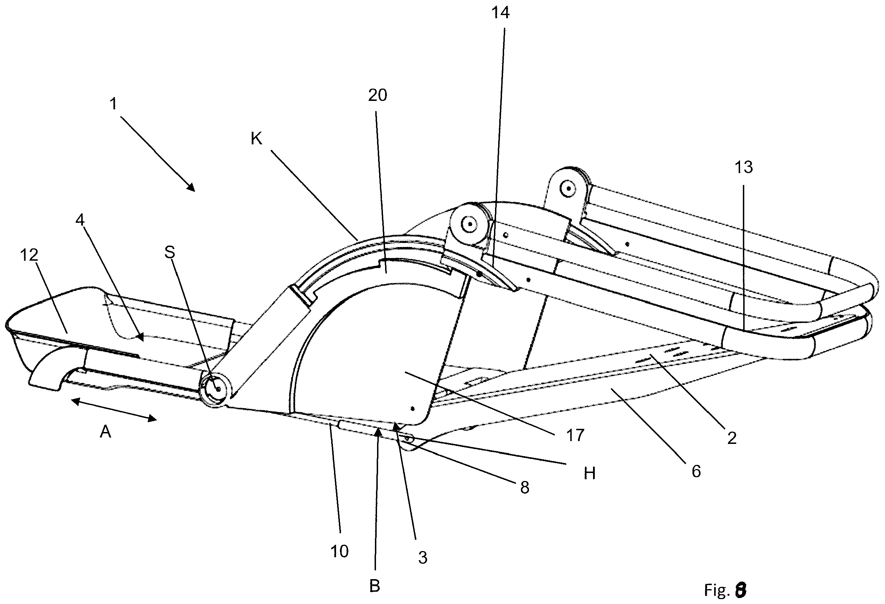

In Fig. 8 ist der entsprechende Sitz 1 aus Fig. 7 in einer perspektivischen Darstellung gezeigt, wobei hier insbesondere hervorgeht, dass das Rahmenelement 13 bzw. dessen Schenkelenden 14 in einer Endposition an dem Stufenprofil 20 angeordnet sind, wo sie als Begrenzung der Verschwenkung wirken.

Die Fig.8 zeigt ferner die verschiebbare schalenförmige Fußstütze 12, die in Richtung des Pfeiles A gegenüber der Beinauflage 4 verschiebbar ist.

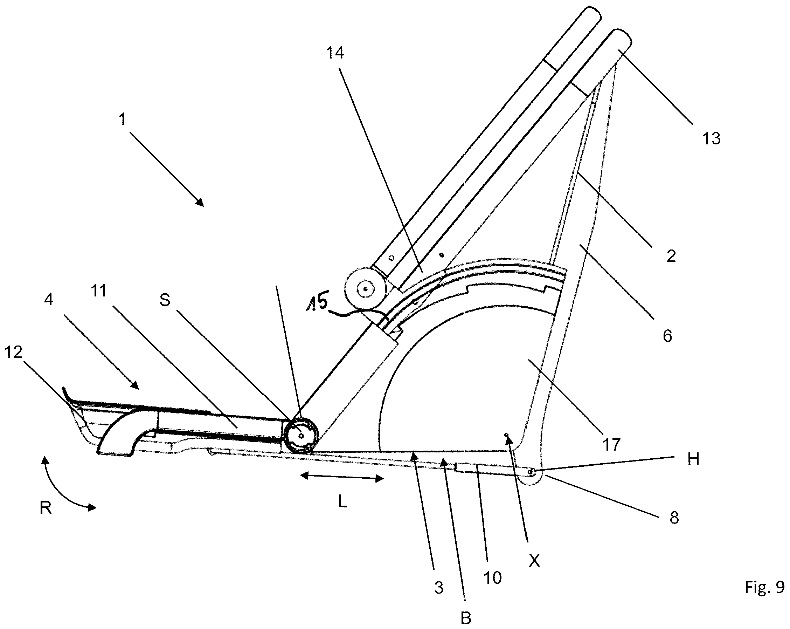

In Fig. 9 ist schließlich noch eine weitere schematische Seitenansicht des Sitzes 1 gezeigt, wobei hier die Rückenlehne 2 und die Beinauflage 4 im entkoppelten Zustand dargestellt sind. Die Rückenlehne 2 ist in diesem Fall in der Sitzposition angeordnet und nicht ausgelenkt. Im Gegensatz hierzu ist die Beinauflage 4 um die Schwenkachse S verschwenkt in der Liegeposition angeordnet.

Dies wird vorteilhaft durch das Vorsehen der teleskopartigen Verbindungselemente 10 einerseits ermöglicht, da diese bei der Zugkraftbeaufschlagung, welche mit der Verschwenkung der Rückenlehne 2 in die Sitzposition einhergeht, in ihrer Länge L ausgezogen und verlängert werden, so dass das Verschwenken erst ermöglicht wird. Zur zusätzlichen Absicherung greift der Vorsprung 18 mit den Stufen des Stufenprofils 20 in entsprechende Wirkverbindung.

Auf der Schwenkachse S ist zudem ein Rastelement 32 angeordnet. Vorteilhaft sind beidseitig der Beinauflage 4 derartige Rastelemente 32 angeordnet. Wird nun das Rastelement 32, welches im einfachsten Fall als Druckknopf oder als Kippschalter ausgebildet ist, mit einem Druck beaufschlagt, so wird die Auslenkung der Beinauflage 4 in der Liegeposition gelöst und bedingt die freie Bewegung der Beinauflage 4, welche dann wieder in die eigentliche Sitzposition rückführbar ist.

Während dieser Rückführung in die eigentliche Sitzposition erfahren die teleskopartigen Verbindungselemente 10 eine Druckkraftbeaufschlagung und reduzieren sich in ihrer Länge L, so dass die ursprünglich in Fig. 1 gezeigte Ausgangssitzposition jederzeit wieder erreichbar ist.

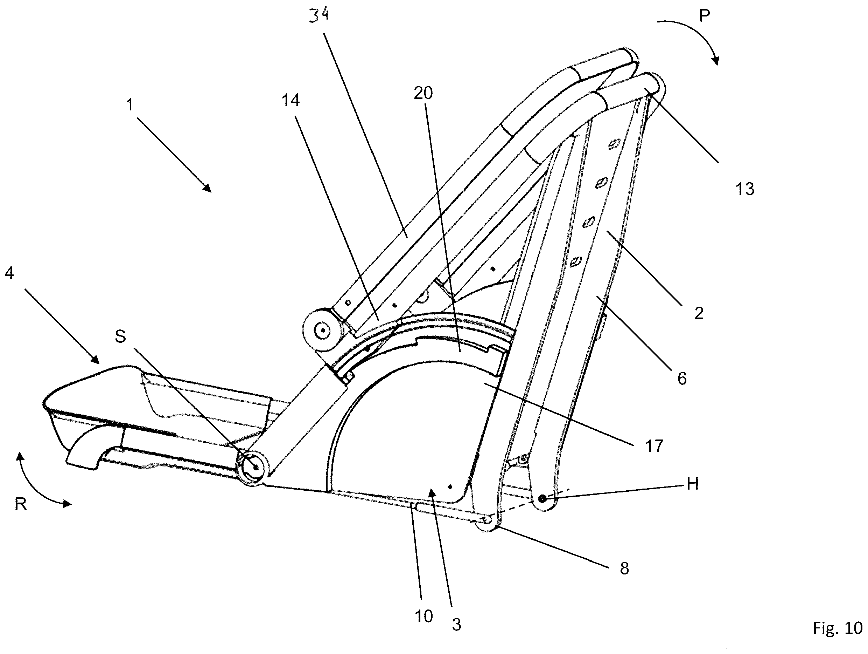

Fig. 10 zeigt die in Fig. 9 dargestellte schematische Seitenansicht nochmals in Perspektive, wobei hier zusätzlich ein Sonnenschutz 34 und/oder ein Tragebügel vorgesehen ist. Vorteilhaft sind beide um eine weitere Schwenkachse Z verschwenkbar angeordnet.

### Bezugszeichenliste

- 1: Sitz
- 2: Rückenlehne
- 3: Sitzelement
- 4: Beinauflage
- 6: Vorsprung
- 8: freies Ende
- 10: teleskopartiges Verbindungselement
- 11: Rahmengestell
- 12: Fußstütze
- 13: Rahmenelement
- 14: Schenkelende
- 15: Kulissenführung
- 16: Ausnehmung / Öffnung
- 17: Begrenzungselement
- 18: nasenartiger Vorsprung
- 19: Anschlag
- 20: Stufenprofil
- 21: Lagerschlitten
- 28: Basis
- 29, 30: weitere Schenkel
- 32: Rastelement
- 34: Sonnenschutz / Tragegriff

- H: Hebelachse
- S: Schwenkachse Beinauflage
- X: Schwenkachse Rückenlehne
- Z: weitere Schwenkachse
- R, P: Schwenkrichtung
- L: Längsrichtung
- B: Bereich
- K: Kreisbogen

## Patentansprüche

1. Sitz (1), welcher derart ausgebildet ist, um an einem Kinderwagen- und/oder Puppenwagengestell verankert zu werden, umfassend wenigstens ein Sitzelement (3), eine Rückenlehne (2), deren Neigung über einen Schwenkmechanismus entlang einer ersten Schwenkachse (X) veränderbar ausgebildet ist, um den Sitz (1) von einer Sitzposition in eine Liegeposition oder umgekehrt zu verbringen, sowie eine Beinauflage (4) zum Abstützen der Beine, welche verschwenkbar um eine zweite Schwenkachse (S) am Sitzelement angelenkt ist, wobei - zwischen Rückenlehne (2) und Beinauflage (4) eine Kopplungseinheit (8, 10) vorgesehen ist, die beim Absenken der Rückenlehne (2) eine gegenläufige Bewegungstransformation der Beinauflage (4) synchron oder zeitversetzt bewirkt und beim Hochstellen der Rückenlehne die Beinauflage in die untere Schwenkstellung zurückstellt oder für eine Rückstellung freigibt, und
- das Sitzelement (3) beim Absenken und Hochstellen der Rückenlehne (2) und der Beinauflage (4) nicht verlagert wird, **dadurch gekennzeichnet, dass**
- die Kopplungseinheit (8, 10) wenigstens ein Verbindungselement (10) aufweist, welches bei Druckkraftbeaufschlagung auf die Rückenlehne (2) in seiner Länge (L) unveränderbar ausgebildet ist und das bei Zugkraftbeaufschlagung auf die Rückenlehne (2) in seiner Länge (L) veränderbar ausgebildet ist.

2. Sitz nach Anspruch 1,
**dadurch gekennzeichnet, dass**
die Kopplungseinheit (8, 10) wenigstens ein stangenförmiges Verbindungselement oder ein in seiner Länge (L) veränderbares Verbindungselement (10) aufweist, das unterhalb des Sitzelements (3) verlaufend angeordnet ist und an mindestens einem Mitnehmer an der Unterseite der Rückenlehne im Bereich der ersten Schwenkachse (X) an dem Sitzelement (3) und an mindestens einem Mitnehmer an der Unterseite der Beinauflage (4) angelenkt ist.

3. Sitz nach Anspruch 1 oder 2,
**dadurch gekennzeichnet, dass**
das wenigstens eine in seiner Länge veränderbare Verbindungselement (10) mehrteilig ausgebildet ist.

4. Sitz nach Anspruch 1,
**dadurch gekennzeichnet, dass**
die Rückenlehne (2) wenigstens einen, sich in Längsrichtung der Rückenlehne (2) erstreckenden oder winklig hierzu abstehenden, die erste Schwenkachse (X) überstehenden Vorsprung (6) als Teil der Kopplungseinheit umfasst.

5. Sitz nach Anspruch 4,
**dadurch gekennzeichnet, dass**
ein freies Ende (8) des Vorsprungs (6) mit einem Ende des Verbindungselements (10) zusammenwirkt, so dass hierdurch eine vorgelagerte Hebelachse (H) ausgebildet ist.

6. Sitz nach Anspruch 5,
**dadurch gekennzeichnet, dass**
die Hebelachse (H) unterhalb des Sitzelements (3) und/oder hinter der Rückenlehne (2) angeordnet ist.

7. Sitz nach wenigstens einem der vorangegangen Ansprüche,
**dadurch gekennzeichnet, dass**
die Beinauflage (4) in der Liegeposition von der Rückenlehne (2) entkoppelt ausgebildet ist.

8. Sitz nach Anspruch 7,
**dadurch gekennzeichnet, dass**
die Beinauflage (4) über wenigstens ein Rastelement (32) in der Liegeposition gehalten ist.

9. Sitz nach Anspruch 8,
**dadurch gekennzeichnet, dass**
das Rastelement (32) auf der zweiten Schwenkachse (S) angeordnet ist.

10. Sitz nach Anspruch 8,
**dadurch gekennzeichnet, dass**
das wenigstens eine Rastelement (32) manuell betätigbar ausgebildet ist.

11. Sitz nach wenigstens einem der vorangegangenen Ansprüche,
**dadurch gekennzeichnet, dass**
die Rückenlehne (2) weiterhin ein Rahmenelement (13) umfasst, dessen Schenkelenden (14) derart gelagert sind, dass diese beim Verschwenken der Rückenlehne (2) von der Sitzposition in die Liegeposition und umgekehrt zumindest teilweise kreisbogenförmig geführt sind.

12. Sitz nach Anspruch 11,
**dadurch gekennzeichnet, dass**
der Sitz (1) weiterhin seitliche Begrenzungselemente (17) umfasst, welche das Sitzelement (3) zumindest teilweise seitlich begrenzen und welche jeweils wenigstens eine Ausnehmung (16) zur Aufnahme der Schenkelenden (14) des Rahmenelements umfassen.

13. Sitz nach Anspruch 12,
**dadurch gekennzeichnet, dass**
die Ausnehmung (16) zumindest teilweise ein Stufenprofil (20) aufweist.

## Claims

1. Seat (1), which is designed in such a manner for being anchored on a frame of a stroller and/or dolls cart, comprising at least one seat element (3), one backrest (2) of which the inclination is designed modifiable by a swivel mechanism along a first swivel axis (X) for putting the seat (1) from a sitting position to a lying position, and leg support (4) for supporting the legs, which is hinged to the seat element in such a way that it can swivel around a second swivel axis (S), wherein
- a coupling unit (8, 10) between backrest (2) and leg support (4) is provided, which causes synchronously or time-delayed an opposite movement transformation of the leg support (4) when the backrest (2) is lowered and reverses the leg support (4) to the lower swing position when the backrest is raised or enables for a reset, and
- the seat element (3) is not shifted when the backrest (2) and the leg support (4) is lowered and raised, **characterized in that**
the coupling unit (8, 10) has at least a connecting element (10), which is designed to be unchangeable in its length (L) when pressurized against the backrest (2) and which is designed to be changeable in its length (L) when tensile force is applied to the backrest (2).

2. Seat according to claim 1, **characterized in that** the coupling unit (8, 10) contains at least one rod-shaped connecting element or one connecting element (10), which is changeable in its length (L), and which passes along and is arranged below the seat element (3) and is hinged on at least one carriage at the underside of the backrest in the area of the first swivel axis (X) on the seat element (3) and on at least one carriage at the underside of the leg support (4).

3. Seat according to claim 1 or 2, **characterized in that** the at least one connecting element (10), which is changeable in its length, is designed in several parts.

4. Seat according to claim 1, **characterized in that** the backrest (2) extending lengthwise of the backrest or protruding at an angle to it comprises at least one protrusion (6) as part of the coupling unit that protrudes the first swivel axis (X).

5. Seat according to claim 4, **characterized in that** a free end (8) of the protrusion (6) interacts with an end of the connecting element (10) in such a way that an upstream lever axis (H) is thereby formed.

6. Seat according to claim 5, **characterized in that** the lever axis (H) is arranged below the seat element (3) and/or behind the backrest (2).

7. Seat according to at least one of the preceding claims, **characterized in that** the leg support (4) is designed decoupled in the lying position.

8. Seat according to claim 7, **characterized in that** the leg support (4) is hold in the lying position by at least one snap-in element (32).

9. Seat according to claim 8, **characterized in that** the snap-in element (32) is arranged on the second swivel axis (S).

10. Seat according to claim 8, **characterized in that** the at least one snap-in element (32) is designed manually operable.

11. Seat according to at least one of the preceding claims, **characterized in that** the backrest (2) furthermore comprises a frame element (13), which thigh ends (14) are pivoted in such a way that when the backrest (2) is swiveled from the sitting position to the lying position and vice versa, they are at least partly guided in an arc of a circle.

12. Seat according to claim 11, **characterized in that** the seat (1) furthermore comprises lateral limiting elements (17), which at least partly delimits the seat element (3) laterally, an which comprises at least one recess (16) in each case for taking up the thigh ends (14) of the frame element.

13. Seat according to claim 12, **characterized in that** the recess (16) comprises at least partly a graded profile.

## Revendications

1. Siège (1), lequel est conçu de façon à être ancré à une armature de poussette pour enfant et/ou de poussette pour poupée, comprenant au moins un élément de siège (3), un dossier (2) dont l'inclinaison est conçue pour pouvoir être modifiée par un mécanisme pivotant le long d'un premier axe de pivotement (X) afin de faire passer le siège (1) d'une position assise à une position couchée ou le contraire, ainsi qu'un repose-jambes (4) pour appuyer les jambes, lequel est articulé de manière pivotante contre l'élément de siège autour d'un second axe de pivotement (S), dans lequel
- entre dossier (2) et repose-jambes (4) est prévue une unité de couplage (8, 10) qui lors de l'abaissement du dossier (2) opère de manière synchrone ou différée une transformation de mouvement opposée du repose-jambes (4) et lors du relèvement du dossier remet le repose-jambes dans la position de pivotement inférieure ou le libère pour une remise en position, et
- l'élément de siège (3) n'est pas déplacé lors de l'abaissement et du relèvement du dossier (2) et du repose-jambes (4), **caractérisé en ce que**
- l'unité de couplage (8, 10) présente au moins un élément de raccordement (10), lequel est conçu de façon à ne pas être modifiable sur sa longueur (L) lors de la sollicitation d'une force de compression sur le dossier (2) et qui est conçu de façon à être modifiable sur sa longueur (L) lors de la sollicitation d'une force de traction sur le dossier (2).

2. Siège selon la revendication 1,
**caractérisé en ce que**
l'unité de couplage (8, 10) présente au moins un élément de raccordement en forme de tige ou un élément de raccordement (10) modifiable dans sa longueur (L), qui est agencé de façon à se dérouler en dessous de l'élément de siège (3) et est articulé contre au moins un entraîneur sur le côté inférieur du dossier dans la zone du premier axe de pivotement (X) contre l'élément de siège (3) et contre au moins un entraîneur sur le côté inférieur du repose-jambes (4).

3. Siège selon la revendication 1 ou 2,
**caractérisé en ce que**
le au moins un élément de raccordement (10) modifiable dans sa longueur est conçu en plusieurs parties.

4. Siège selon la revendication 1,
**caractérisé en ce que**
le dossier (2) comprend au moins une projection (6) s'étendant dans le sens de la longueur du dossier (2) ou s'écartant de manière angulaire de celui-ci, en saillie par rapport au premier axe de pivotement (X), en tant que partie de l'unité de couplage.

5. Siège selon la revendication 4,
**caractérisé en ce que**
une extrémité libre (8) de la projection (6) coopère avec une extrémité de l'élément de raccordement (10), de sorte que soit ainsi formé un axe de levier (H) situé en amont.

6. Siège selon la revendication 5,
**caractérisé en ce que**
l'axe de levier (H) est agencé en dessous de l'élément de siège (3) et/ou derrière le dossier (2).

7. Siège selon l'une quelconque des revendications précédentes,
**caractérisé en ce que**
dans la position couchée le repose-jambes (4) est conçu découplé du dossier (2).

8. Siège selon la revendication 7,
**caractérisé en ce que**
le repose-jambes (4) est maintenu dans la position couchée par au moins un élément d'encliquetage (32).

9. Siège selon la revendication 8,
**caractérisé en ce que**
l'élément d'encliquetage (32) est agencé sur le second axe de pivotement (S).

10. Siège selon la revendication 8,
**caractérisé en ce que**
le au moins un élément d'encliquetage (32) est conçu de manière manuellement actionnable.

11. Siège selon l'une quelconque des revendications précédentes,
**caractérisé en ce que**
le dossier (2) comprend en outre un élément de cadre (13) dont les extrémités de branche (14) sont posées de telle sorte que celles-ci soient guidées au moins partiellement en arc de cercle lors du pivotement du dossier (2) depuis la position assise vers la position couchée et le contraire.

12. Siège selon la revendication 11,
**caractérisé en ce que**
le siège (1) comprend en outre des éléments de délimitation (17) latéraux, lesquels délimitent latéralement au moins partiellement l'élément de siège (3) et lesquels comprennent respectivement au moins un évidement (16) pour loger les extrémités de branche (14) de l'élément de cadre.

13. Siège selon la revendication 12,
**caractérisé en ce que**
l'évidement (16) présente au moins partiellement un profil crénelé (20).
